# EUROPÄISCHE PATENTSCHRIFT

(11) **EP 0 814 287 B1**
(45) Veröffentlichungstag und Bekanntmachung des Hinweises auf die Patenterteilung: **12.09.2001**
(21) Anmeldenummer: 97106827.5
(22) Anmeldetag: 24.04.1997
(51) Int. Cl.: F16H 63/48, F16H 59/02, F16H 59/10

(54) **Parksperre für ein Kraftfahrzeug mit einem automatischen Getriebe**
Park-lock mechanism for motor vehicle with an automatic transmission
Frein de stationnement pour véhicule automobile équipé d'une transmission automatique

(30) Priorität: 22.06.1996 DE 19625019
(43) Veröffentlichungstag der Anmeldung: 29.12.1997
(73) Patentinhaber: Bayerische Motoren Werke Aktiengesellschaft, 80788 München (DE)
(72) Erfinder: Michael, Joerg, 85055 Ingolstadt (DE); Ehrmaier, Rudolf, 81927 München (DE); Neuner, Josef, 83064 Raubling (DE)

(56) Entgegenhaltungen:
- DE-A- 4 322 523
- US-A- 3 937 105
- US-A- 4 892 014

## Beschreibung

Die Erfindung betrifft ein Kraftfahrzeug mit einem Automatikgetriebe nach dem Oberbegriff des Hauptanspruchs.

Die DE 43 22 523 A1 beschreibt eine Steuereinrichtung für ein automatisches Kraftfahrzeuggetriebe, bei der die Betriebsstufen D, R und N durch Druckbeaufschlagung einzelner Schaltglieder eingelegt werden, während die Betriebsstufe P durch Drucklosschaltung aller Schaltglieder eingelegt wird. Zusätzlich ist eine Wähleinrichtung mit einer Parksperre durch eine zweite Steuereinrichtung so gekoppelt, dass das Einrücken der Parksperre verhindert wird, wenn an der Wähleinrichtung nicht die Betriebsstufe P eingelegt ist. Es handelt sich hier um eine elektrohydraulische Steuereinrichtung, die bis auf die Noteinrichtungen ausschließlich über die Wähleinrichtung angesteuert wird.

Die US-A-4 892 014 und die US-A-3 937 105 beschreiben beide unter anderem ein Kraftfahrzeug gemäß dem Oberbegriff des Anspruchs 1 mit einem Motor und einem Automatikgetriebe, mit einem Wählhebel mindestens einer Wähleinrichtung als Bedienelement, mit dem ein Fahrer eine elektrische Getriebesteuereinrichtung ansteuert, die abhängig von einer am Wählhebel gewählten Fahrstufe und von anderen Betriebsparametern des Kraftfahrzeugs unter anderem eine Parksperrenfunktion des Automatikgetriebes so steuert, dass die Parksperre im Automatikgetriebe eingelegt wird, wenn die Fahrgeschwindigkeit des Kraftfahrzeugs Null ist und gleichzeitig ein Zündstromkreis unterbrochen wurde. In den Steuereinrichtungen für die automatischen Kraftfahrzeuggetriebe sind zum automatischen Einlegen der Betriebsstufe P teilweise noch weitere Bedingungen hinterlegt.

Aufgabe dieser Erfindung ist es, für ein Automatikgetriebe eines Kraftfahrzeugs eine weitere automatische Steuerung der Parksperrenfunktion bereitzustellen.

Die Aufgabe wird erfindungsgemäß mit den kennzeichnenden Merkmalen des Anspruchs 1 gelöst. Weitere Ausgestaltungen der Erfindung ergeben sich aus den Unteransprüchen.

Nach der Erfindung wird die automatisierte Parksperre eines Automatikgetriebes eingelegt, wenn die Fahrgeschwindigkeit des Kraftfahrzeugs gleich Null ist und gleichzeitig der Zündstromkreis mit dem Zündschlüssel unterbrochen wurde und als weitere Bedingung zum Einlegen der Parksperre, nach dem Unterbrechen des Zündstromkreises eine vorbestimmte Zeitspanne verstrichen ist, oder als weitere Bedingung zum Einlegen der Parksperre, eine Fahrzeugtür geöffnet wird, oder als spätestens einzige Bedingung zum Einlegen der Parksperre, der Zündschlüssel aus dem Zündschloss entfernt sein muss. Des weiteren ist die Variation der automatischen Steuerung der Parksperrenfunktion dadurch gekennzeichnet, dass das Einlegen der Parksperre bei Eintritt jeder der vorgenannten Bedingungen verhindert wird, wenn mit dem Wählhebel die Fahrstufe N direkt vor dem Abschalten des Motors oder innerhalb einer vorbestimmten Zeitspanne nach dem Abschalten des Motors angewählt wird.

Das hat den Vorteil, dass sich die automatisierte Parksperre abhängig von zusätzlichen Betriebsparametern des Kraftfahrzeugs von selbst einlegt, wenn dazu Notwendigkeit besteht Die Parksperre ist nur wirksam, wenn der Motor nicht läuft. Außerdem wird das Einlegen der Parksperre im Automatikgetriebe verhindert, wenn mit dem Wählhebel die Fahrstufe N direkt vor dem Abschalten des Motors oder innerhalb einer vorbestimmten Zeitspanne nach dem Abschalten des Motors angewählt wird.

Bei einer bevorzugten Ausführung der Erfindung wird ein Einlegen der Parksperre bei stehendem Motor aktiv dadurch verhindert, dass ein Elektromagnet als Sperrglied verwendet wird. Vorteilhaft ist, wenn das Sperrglied seine Sperrwirkung nur beim Einlegen der Fahrstufe P ausübt, dass das Lösen der Parksperre nicht vom Sperrglied beeinflusst wird.

Das Sperrglied ist in einer weiteren bevorzugten Ausführung der Erfindung nur einseitig wirksam, das heißt, es kann beim Lösen der Parksperre unabhängig von seinem Zustand überdrückt werden. Das hat den Vorteil, dass eine Notentriegelung der Parksperre auch bei Ausfall der automatisierten Parksperre möglich ist.

in einer weiteren vorteilhaften Ausführung der Erfindung ist die Parksperre so konzipiert, dass sie durch die Kraft einer vorgespannten Feder eingelegt wird. Gelöst wird sie durch hydraulische Kraft, die beim Lösen die durch das Einlegen entspannte Feder wieder vorspannt.

Bei einer bevorzugten Ausführung der Erfindung ist der Wählhebel in zwei in etwa senkrecht zueinander stehenden Betätigungsebenen bewegbar und kehrt dabei selbsttätig immer in seine Ausgangsstellung in der Mitte zurück. Er ist so vorzugsweise in die Richtungen eines rechtwinkligen Achsenkreuzes bewegbar. Vorteilhafterweise wird dann die am Wählhebel eingestellte Fahrstufe dem Fahrer durch eine Anzeigeeinrichtung angezeigt, wobei gleichzeitig noch die Fahrstufen für die jeweilige Bewegungsrichtung des Wählhebels angezeigt werden können, die bei Bewegung des Wählhebels in diese Richtung eingelegt werden.

Desweiteren ist es vorteilhaft, wenn die Anzeigeeinrichtung eine weitere Anzeigeebene umfaßt, die im wesentlichen parallel zu einer Anzeigeebene verläuft, damit vier Bewegungsrichtungen für den Wählhebel mehr als vier verschiedene Funktionen zugeordnet und diese durch die Anzeigeeinrichtung angezeigt werden können.

Bei einer weiteren vorteilhaften Ausführung der Erfindung wird die Anzeige der Anzeigeeinrichtung in allen Fahrstufen durch die elektrische Getriebesteuereinrichtung angesteuert und die eingelegte Fahrstufe P durch einen Sensor im Getriebe ermittelt, der dann die Anzeigeeinrichtung ansteuert. Dabei kann zusätzlich bei ausgeschalteter Zündung die elektrische Getriebesteuereinrichtung abgeschaltet werden, wenn durch den Sensor im Getriebe die Anzeigeeinrichtung angesteuert wird. Durch Abschalten der elektrischen Getriebesteuereinrichtung und eventuell der Anzeigeeinrichtung wird ein Ruhestromverbrauch verhindert. Besonders vorteilhaft ist es, wenn die Anzeige der Anzeigeeinrichtung bei ausgeschalteter Zündung und eingelegter Fahrstufe P nach einer vorbestimmten Zeitspanne oder bei aus dem Zündschloß entferntem Zündschlüssel mit einer Verbraucherabschaltung oder beim Betätigen des Türschlosses des Kraftfahrzeuges abgeschaltet wird.

Bei einer weiteren bevorzugten Ausführung der Erfindung ist ein Betätigungselement vorhanden, durch das der Fahrer die Parksperre einlegen kann. Das bewirkt vorteilhafterweise eine Betätigung der Feststellbremse. Als Betätigungselement kommt vorzugsweise der Wählhebel oder ein Schalter oder Taster am Wählhebel oder am Lenkrad in Betracht. Außerdem ist ein mechanisches Notentriegelungssystem vorhanden, mit dem, insbesondere vom Fahrgastraum aus, die Parksperre außer Kraft gesetzt werden kann. Dadurch besteht vorteilhafterweise bei Ausfall des elektrischen Systems die Möglichkeit, eine Notentriegelung zu betätigen, welche den Zustand "Parksperre eingelegt" aufhebt. Dies kann notwendig sein zum Abschleppen des Fahrzeugs.

Bei einer weiteren bevorzugten Ausführung der Erfindung ist das Zündschloß mit einem Sperrelement versehen, das das Abziehen des Zündschlüssels nur ermöglicht, wenn die Fahrgeschwindigkeit gleich Null ist oder wenn die Fahrgeschwindigkeit gleich Null ist und gleichzeitig die Betriebsbremse betätigt wird. Ganz besonders vorteilhaft ist die Verwendung eines elektromagnetischen Sperrelementes. Dieses kann dann zum Beispiel von einem Steuergerät für ein Antiblockiersystem angesteuert werden.

Bei einer weiteren vorteilhaften Ausführung der Erfindung wird durch die elektrische Getriebesteuereinrichtung eine Fahrstufe für den Fahrbetrieb des Kraftfahrzeugs nur eingelegt, wenn gleichzeitig die Betriebsbremse betätigt ist. Dabei ist von Vorteil, wenn eine akustische und/oder optische Warneinrichtung vorhanden ist, die dann betätigt wird, wenn versucht wird, eine Fahrstufe für Fahrbetrieb einzulegen, ohne Betätigung der Betriebsbremse.

Ein bevorzugtes Ausführungsbeispiel der Erfindung ist in der nachfolgenden Beschreibung mit der zugehörigen Zeichnung dargestellt. Es zeigen
- Figur 1: die schematische Darstellung eines Signalflußplans einer Getriebesteuereinrichtung gemäß der Erfindung,
- Figur 2: einen Schaltplan für das Einlegen der Parksperre, dargestellt durch logische Verknüpfungen.

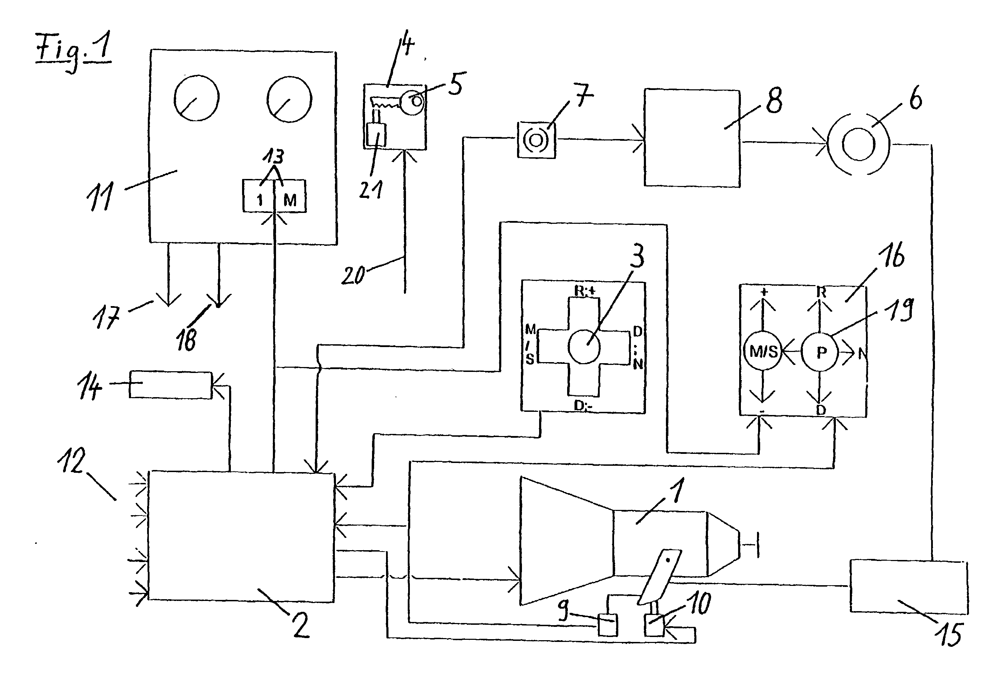

Nach Figur 1 wird ein automatisches Kraftfahrzeuggetriebe 1, bei dem die einzelnen Gänge zusätzlich auch manuell über einen Wählhebel 3 steuerbar sind, durch eine symbolisch angedeutete elektrische Getriebesteuereinrichtung 2 angesteuert. Diese elektrische Getriebesteuereinrichtung 2 bewirkt beim Automatikbetrieb des Kraftfahrzeuggetriebes 1 das Einlegen der Fahrstufen R, N, D oder P, je nach Stellung eines Wählhebels 3. Desweiteren beim manuellen Betrieb das Schalten in die nächste Fahrbetriebsstufe gemäß dem entsprechenden Wählhebelsignal. Der Wählhebel 3 ist entlang der Richtungen eines rechtwinkligen Achsenkreuzes bewegbar, wobei jede Bewegungsrichtung das Einlegen einer Fahrstufe bewirkt. Zusätzlich werden zum Einlegen der Fahrstufe P zur Aktivierung der Parksperre im automatischen Kraftfahrzeuggetriebe 1 gegenwärtige Betriebsdaten des Kraftfahrzeugs der elektrischen Getriebesteuereinrichtung 2 mitgeteilt. Es handelt sich hierbei zum Beispiel um die Geschwindigkeit des Kraftfahrzeugs, die Drehzahl des Kraftfahrzeugmotors und die Stellung der Betriebsbremse, angedeutet gezeichnet durch die Pfeile 12. Desweiteren wird noch ein Signal von einem Zündschloß 4 benötigt, ob sich ein Zündschlüssel 5 im Zündschloß 4 befindet oder nicht. Das Kraftfahrzeug ist mit einer elektrischen Feststellbremse 6 ausgerüstet, die dazu dient, das Kraftfahrzeug notwendigenfalls unter den Betriebsbedingungen festzubremsen, bei denen die Parksperre im automatischen Kraftfahrzeuggetriebe 1 gelöst ist. Die elektrische Feststellbremse 6 kann vom Fahrer über eine Betätigungseinrichtung 7 betätigt werden. Das Betätigungssignal geht zu einem Steuergerät 8 für die elektrische Feststellbremse 6 und von dort zur elektrischen Feststellbremse 6 selbst. Ein Steuergerät 9 zum Einlegen der Parksperre P, abhängig von anderen Betriebsparametem, ist ebenfalls dargestellt. Es wird von den Signalen vom Zündschloß 4, der Fahrzeuggeschwindigkeit v und der Drehzahl n des Motors beaufschlagt. Am automatischen Kraftfahrzeuggetriebe 1 selbst ist ein Elektromagnet 10 angebracht, der als Sperrglied das Einlegen der Parksperre verhindert. Dabei ist im automatischen Kraftfahrzeuggetriebe 1 eine nicht gezeichnete Feder vorgespannt, durch deren Kraft sich die Parksperre beim Bestromen des Elektromagneten 10 und entsprechenden Betriebsbedingungen einlegt.

Von der elektrischen Getriebesteuereinrichtung 2 wird auch noch eine Kombianzeige 11 angesteuert, die dem Fahrer die aktuell eingelegte Fahrstufe 13 anzeigt. Von der Kombianzeige 11 aus können unter Umständen auch Rückwärtsfahrlicht 17 bzw. Rückwärtsfahrgong 18 ausgelöst werden.

Von der Getriebesteuereinrichtung 2 wird außerdem eine Anlaßsperre 14 angesteuert.

Eine Notentriegelung 15 steht sowohl mit der Bremse 6, als auch mit der Parksperre des Automatikgetriebes in Verbindung.

Eine Wählhebelanzeige 16 im Blickfeld des Fahrers zeigt sowohl die aktuell eingelegte Fahrstufe, als auch die jeweiligen Schaltmöglichkeiten für den Wählhebel 3 an. Die aktuell eingelegte Position erscheint in der Mitte (hier P) und wird hervorgehoben durch Farbgebung, Helligkeit oder durch einen beleuchteten oder farbigen Rahmen 19. Es ist auch vorstellbar, daß die aktuell angewählte Position im Schaltschema der Anzeigeeinrichtung 16 abgedunkelt wird. Oder können alle momentan anwählbaren Richtungen und/oder Funktionen bzw. Wählhebelstellungen durch Farbe oder Helligkeit von den momentan nicht anwählbaren Richtungen in der Anzeigeeinrichtung 16 unterschieden werden.

Der Pfeil 20 stellt sinnbildlich dar, daß ein Elektromagnet 21 den Zündschlüssel 5 im Zündschloß 4 verriegeln oder freigeben kann, gesteuert von der Getriebesteuereinrichtung 2, je nach Zustand der Betriebsparameter Geschwindigkeit und Bremssignal.

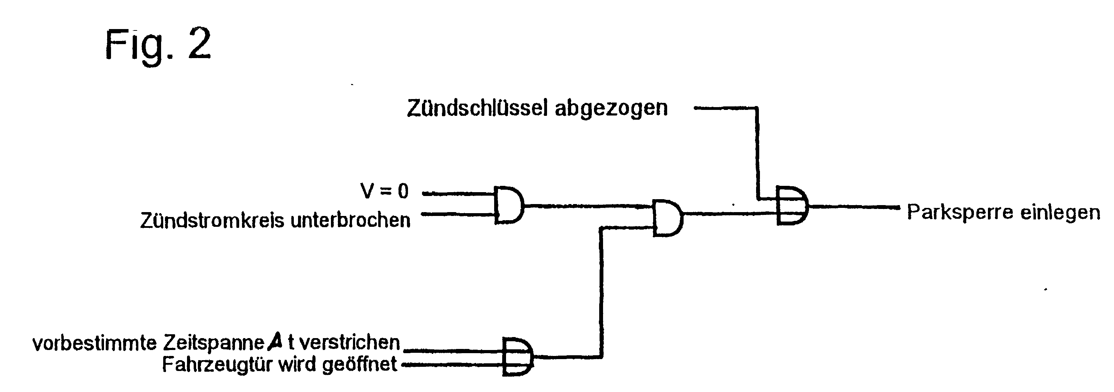

Durch logische Verknüpfungen wird in Figur 2 dargestellt, daß die Parksperre im Automatikgetriebe eingelegt wird, wenn Fahrgeschwindigkeit v des Kraftfahrzeugs gleich Null ist und gleichzeitig der Zündstromkreis mit dem Zündschlüssel unterbrochen wurde und danach eine vorbestimmte Zeitspanne verstrichen ist oder danach eine Fahrzeugtür geöffnet wird, oder spätestens wenn der Zündschlüssel 5 aus dem Zündschloß 4 entfernt ist. Wenn beide Bedingungen erfüllt sind, wird die Parksperre auch eingelegt. Dies geschieht durch Bestromen des Elektromagneten 10 in Figur 1.

Beim Betrieb des Kraftfahrzeugs wird die Parksperre dann elektrohydraulisch entriegelt, wenn die Drehzahl n des Motors nicht Null ist, dieser also läuft und wenn eine der Fahrstufen R, N oder D eingelegt ist. Durch das automatische Einlegen der Parksperre, abhängig von anderen Betriebsparametem des Kraftfahrzeugs als der Wählhebelposition, ist es möglich, die Wähleinrichtung mit dem Wählhebel 3 so zu gestalten, daß nur die drei Positionen R, N, D als Tasterfunktionen und die manuelle Schrittschaltfunktion ausgeführt sind. Dazu kann noch eine Haltefunktion über eine elektrische Steuerung verwirklicht sein. Die automatisierte Parksperre ist dabei nur wirksam, wenn der Motor nicht läuft. Zusätzlich kann ein Einfallen der Parksperre bei stehendem Motor durch den Elektromagneten 10 verhindert werden. Die Parksperre wird automatisch betätigt bei stehendem Motor und Fahrgeschwindigkeit gleich Null, spätestens jedoch bei Abziehen des Zündschlüssels Bei laufendem Motor wird das Kraftfahrzeug nur über eine elektrische Bremse 6 festgelegt. Da bei vom Zündschloß 4 abgezogenem Zündschlüssel 5 die Parksperre grundsätzlich eingelegt ist, ist es für die Verwirklichung einer Interlock-Funktion nur noch notwendig, das Abziehen des Zündschlüssels 5 aus dem Zündschloß 4 während der Fahrt zu verhindern.

Für die Verwirklichung einer Shiftlock-Funktion ist es notwendig, daß die Bewegungen des Wählhebels 3 zum Einlegen der Fahrstufen R oder D nur weitergegeben werden, wenn gleichzeitig die Betriebsbremse betätigt wird.

## Patentansprüche

1. Kraftfahrzeug mit einem Motor und einem Automatikgetriebe (1), mit einem Wählhebel (3) mindestens einer Wähleinrichtung als Bedienelement, mit dem ein Fahrer eine elektrische Getriebesteuereinrichtung (2) ansteuert, die abhängig von einer am Wählhebel (3) gewählten Fahrstufe und von anderen Betriebsparametem des Kraftfahrzeugs unter anderem eine Parksperrenfunktion des Automatikgetriebes (1) so steuert, dass die Parksperre im Automatikgetriebe (1) eingelegt wird, wenn die Fahrgeschwindigkeit des Kraftfahrzeugs Null ist und gleichzeitig ein Zündstromkreis, insbesondere mit einem Zündschlüssel (5), unterbrochen wurde, gekennzeichnet dadurch, dass als weitere Bedingung zum Einlegen der Parksperre nach dem Unterbrechen des Zündstromkreises eine vorbestimmte Zeitspanne verstrichen sein muss oder dass als weitere Bedingung zum Einlegen der Parksperre eine Fahrzeugtür geöffnet wird oder dass spätestens als einzige Bedingung zum Einlegen der Parksperre die Entfernung des Zündschlüssels (5) aus einem Zündschloss (4) erfüllt sein muss und dass das Einlegen der Parksperre bei Eintritt jeder der vorgenannten Bedingungen verhindert wird, wenn mit dem Wählhebel (3) die Fahrstufe N direkt vor dem Abschalten des Motors oder innerhalb einer vorbestimmten Zeitspanne nach dem Abschalten des Motors angewählt wird.

2. Kraftfahrzeug nach Anspruch 1, **dadurch gekennzeichnet, dass** das Lösen der Parksperre hydraulisch erfolgt und beim Lösen der Parksperre eine Feder vorgespannt wird.

3. Kraftfahrzeug nach Anspruch 2, **dadurch gekennzeichnet, dass** durch ein Sperrglied, insbesondere ein Elektromagnet (10), das Einlegen der Parksperre verhindert werden kann.

4. Kraftfahrzeug nach Anspruch 3, **dadurch gekennzeichnet, dass** das Sperrglied seine Sperrwirkung nur beim Einlegen der Fahrstufe P aufhebt.

5. Kraftfahrzeug nach einem der Ansprüche 3 oder 4, **dadurch gekennzeichnet, dass** das Sperrglied beim Lösen der Parksperre keine Sperrwirkung ausübt

6. Kraftfahrzeug nach einem der Ansprüche 1 bis 5, **dadurch gekennzeichnet, dass** der Wählhebel (3) mindestens in zwei in etwa senkrecht zueinander stehenden Betätigungsebenen bewegbar ist und in seine Ausgangsstellung in der Mitte selbsttätig zurückkehrt.

7. Kraftfahrzeug nach einem der Ansprüche 1 bis 6, **dadurch gekennzeichnet, dass** die am Wählhebel (3) eingestellte Fahrstufe dem Fahrer durch eine Anzeigeeinrichtung (16) angezeigt wird.

8. Kraftfahrzeug nach Anspruch 7, **dadurch gekennzeichnet, dass** durch die Anzeigeeinrichtung (16) zusätzlich die jeweiligen Schaltmöglichkeiten für den Wählhebel (3) angezeigt werden.

9. Kraftfahrzeug nach Anspruch 7 oder 8, **dadurch gekennzeichnet, dass** die Anzeigeeinrichtung (16) eine weitere Anzeigeebene umfasst, damit vier Bewegungsrichtungen für den Wählhebel (3) mehr als vier verschiedene Funktionen zugeordnet und diese durch die Anzeigeeinrichtung (16) angezeigt werden können.

10. Kraftfahrzeug nach einem der Ansprüche 1 bis 9, **dadurch gekennzeichnet, dass** die Anzeige der Anzeigeeinrichtung (16) in allen Fahrstufen durch die elektrische Getriebesteuereinrichtung (2) angesteuert wird und die eingelegte Fahrstufe P durch einen Sensor im Getriebe ermittelt wird, der dann die Anzeigeeinrichtung (16) ansteuert.

11. Kraftfahrzeug nach Anspruch 10, **dadurch gekennzeichnet, dass** bei ausgeschalteter Zündung die elektrische Getriebesteuereinrichtung (2) abgeschaltet wird, wenn durch den Sensor im Getriebe die Anzeigeeinrichtung (16) angesteuert wird.

12. Kraftfahrzeug nach Anspruch 11, **dadurch gekennzeichnet, dass** die Anzeige der Anzeigeeinrichtung (16) bei ausgeschalteter Zündung und eingelegter Fahrstufe P nach einer vorbestimmten Zeitspanne oder bei aus dem Zündschloss (4) entferntem Zündschlüssel (5) mit einer Verbraucherabschaltung oder beim Betätigen eines Türschlosses des Kraftfahrzeugs abgeschaltet wird.

13. Kraftfahrzeug nach einem der Ansprüche 1 bis 12, **dadurch gekennzeichnet, dass** ein Betätigungselement vorhanden ist, durch das der Fahrer die Parksperre einlegen kann.

14. Kraftfahrzeug nach einem der Ansprüche 1 bis 13, **dadurch gekennzeichnet, dass** das Einlegen der Parksperre über das Betätigungselement eine Betätigung der Feststellbremse bewirkt.

15. Kraftfahrzeug nach einem der Ansprüche 1 bis 14, **dadurch gekennzeichnet, dass** das Zündschloss (4) mit einem Sperrelement, insbesondere einem elektromagnetischen Sperrelement, versehen ist, das das Abziehen des Zündschlüssels (5) nur ermöglicht, wenn die Fahrgeschwindigkeit gleich Null ist oder wenn die Fahrgeschwindigkeit gleich Null ist und gleichzeitig die Betriebsbremse betätigt wird.

16. Kraftfahrzeug nach einem der Ansprüche 1 bis 15, **dadurch gekennzeichnet, dass** das Sperrelement von einem Steuergerät, vorzugsweise einem Getriebe- und/oder Bremssteuergerät, angesteuert wird.

17. Kraftfahrzeug nach einem der Ansprüche 1 bis 16, **dadurch gekennzeichnet, dass** durch die elektrische Getriebesteuereinrichtung (2) eine Fahrstufe für den Fahrbetrieb des Kraftfahrzeugs nur eingelegt wird, wenn gleichzeitig die Betriebsbremse betätigt ist.

18. Kraftfahrzeug nach Anspruch 17, **dadurch gekennzeichnet, dass** eine akustische und/oder optische Signaleinrichtung vorhanden ist, die dann betätigt wird, wenn versucht wird, eine Fahrstufe für Fahrbetrieb einzulegen, ohne Betätigung der Betriebsbremse.

19. Kraftfahrzeug nach einem der Ansprüche 1 bis 18, **dadurch gekennzeichnet, dass** die Parksperre durch ein mechanisches Notentriegelungssystem, insbesondere vom Fahrgastraum aus, außer Kraft gesetzt werden kann.

## Claims

1. A motor vehicle with an engine and an automatic gearbox (1), with a selector lever (3) as the operating element of at least one selector device, with which the driver controls an electrical gearbox control device (2), which depending on a selected drive position selected by the selector lever (3) and on other operating parameters of the motor vehicle including amongst others a parking lock function of the automatic gearbox (1) such that the parking lock is engaged in the automatic gearbox (1), when the speed of travel of the motor vehicle is zero and at the same time an ignition circuit is broken, especially by an ignition key (5), **characterised in that**, as a further condition for the engagement of the parking lock following the interruption of the ignition circuit a predetermined time interval must have elapsed or that as a further condition for the engagement of the parking lock a vehicle door is opened or that at the latest as the only condition for the engagement of the parking lock the removal of the ignition key (5) from an ignition lock (4) must be fulfilled and that the engagement of the parking lock on the advent of each of the aforesaid conditions is prevented, if the drive condition N is selected with the selector lever (3) directly before the engine is switched off or within a predetermined time interval after the engine is switched off.

2. A motor vehicle according to Claim 1, **characterised in that** the release of the parking lock occurs hydraulically and that on release of the parking lock a spring is pre-tensioned.

3. A motor vehicle according to Claim 2, **characterised in that** the engagement of the parking lock can be prevented by a blocking element, especially an electromagnet (10).

4. A motor vehicle according to Claim 3, **characterised in that** the blocking element releases its blocking function only by engagement of the drive position P.

5. A motor vehicle according to one of the Claims 3 or 4, **characterised in that** the blocking element exerts no blocking function on release of the parking lock.

6. A motor vehicle according to one of the Claims 1 to 5, **characterised in that** the selector lever (3) can be moved in at least two operating planes somewhat at right angles to each other and returns automatically into its starting position in the middle.

7. A motor vehicle according to one of the Claims 1 to 6, **characterised in that** the drive position engaged from the selector lever (3) is indicated to the driver by a display device (16).

8. A motor vehicle according to Claim 7, **characterised in that** the current shifting possibilities for the selector lever (3) are additionally displayed by a display device (16).

9. A motor vehicle according to Claim 7 or Claim 8, **characterised in that** the display device (16) includes a further level of display, with which four directions of movement of the selector lever (3) more than four different functions can be allocated and these can be displayed by the display device (16).

10. A motor vehicle according to one of the Claims 1 to 9, **characterised in that** the display of the display device (16) is controlled by the electrical gearbox control device (2) in all drive positions and the engaged drive position P is detected by a sensor in the gearbox, which then controls the display device (16).

11. A motor vehicle according to Claim 10, **characterised in that** with the ignition switched off the electrical gearbox control device is turned off when the display device (16) has been controlled on by the sensor in the gearbox.

12. A motor vehicle according to Claim 11, **characterised in that** the indication of the display device (16) is turned off, with the ignition switched off and drive position P selected, after a predetermined time period or by the removal of the ignition key (5) from the ignition lock (4) or by the operation of a door lock of the motor vehicle.

13. A motor vehicle according to one of the Claims 1 to 12, **characterised in that** an actuating element is present with which the driver can engage the parking lock.

14. A motor vehicle according to one of the Claims 1 to 13, **characterised in that** the actuation of the parking lock via the actuating element causes the application of the parking brake.

15. A motor vehicle according to one of the Claims 1 to 14, **characterised in that** the ignition lock (4) is provided with a blocking element, especially an electromagnetic blocking element, which only permits the removal of the ignition key (5), if the speed of travel is equal to zero or if the speed of travel is equal to zero and at the same time the service brake is operated.

16. A motor vehicle according to one of the Claims 1 to 15, **characterised in that** the blocking element is controlled by a control unit, preferably a gearbox and/or a brake control unit.

17. A motor vehicle according to one of the Claims 1 to 16, **characterised in that** a drive position for the travelling operation of the motor vehicle is only selected by the electrical gearbox control device (2) if the service brake is operated at the same time.

18. A motor vehicle according to Claim 17, **characterised in that** an acoustic and/or optical signalling device is present, which is operated if an attempt is made to select a drive position without operating the service brake.

19. A motor vehicle according to one of the Claims 1 to 18, **characterised in that** the parking lock can be set out of power by a mechanical emergency unlocking system, especially from the passenger compartment.

## Revendications

1. Véhicule comportant un moteur et une boîte de vitesses automatique (1), un levier sélecteur (3) avec une installation de sélection comme élément de manoeuvre par lequel un conducteur commande une installation électrique de commande de boîte de vitesses (2) qui, indépendamment d'une position de conduite choisie sur le levier sélecteur (3) ainsi que d'autres paramètres de fonctionnement du véhicule, commande entre autres une fonction de blocage de stationnement de la boîte de vitesses automatique (1) pour que le blocage de stationnement soit mis en oeuvre dans la boîte de vitesses automatique (1) si la vitesse de déplacement du véhicule est égale à zéro et si en même temps le circuit d'allumage a été coupé par la clé de contact (5),
**caractérisé en ce que**
comme autre condition pour mettre en oeuvre le blocage de stationnement après coupure du circuit électrique d'allumage, il faut qu'un certain temps se soit écoulé, ou comme autre condition pour passer le blocage de stationnement, une porte doit être ouverte ou qu'au plus tard comme unique condition pour mettre en place le blocage de stationnement, la clé de contact (5) ait été extraite de la serrure de contact (4), et la mise en place du blocage de stationnement est interdite lorsqu'on entre dans chacune des conditions ci-dessus, si avec le levier sélecteur (3), la position de conduite (N) a été sélectionnée directement avant la coupure du moteur ou dans une durée prédéterminée après la coupure du moteur.

2. Véhicule selon la revendication 1,
**caractérisé en ce que**
l'ouverture du blocage de stationnement se fait de manière hydraulique et lors de l'ouverture du blocage de stationnement, on précontraint un ressort.

3. Véhicule selon la revendication 2,
**caractérisé par**
un organe d'interdiction, notamment un électro-aimant (10), qui évite la mise en place du blocage de stationnement.

4. Véhicule selon la revendication 3,
**caractérisé en ce que**
l'organe d'interdiction exerce son effet de verrouillage uniquement lorsqu'on enclenche la position de conduite P.

5. Véhicule selon l'une des revendications 3 ou 4,
**caractérisé en ce que**
l'organe d'interdiction n'exerce aucun effet lorsque le blocage de stationnement n'est pas enclenché.

6. Véhicule selon l'une quelconque des revendications 1 à 5,
**caractérisé en ce que**
le levier sélecteur (3) est mobile dans au moins deux plans d'actionnement perpendiculaires sensiblement l'un à l'autre et il revient automatiquement au milieu dans sa position de repos.

7. Véhicule selon l'une quelconque des revendications 1 à 6,
**caractérisé en ce que**
la position de conduite réglée sur le levier sélecteur (3) est affichée au conducteur par une installation d'affichage (16).

8. Véhicule selon la revendication 7,
**caractérisé en ce que**
l'installation d'affichage (16) affiche en outre les possibilités de commutation respectives pour le levier sélecteur (3).

9. Véhicule selon l'une des revendications 7 ou 8,
**caractérisé en ce que**
l'installation d'affichage (16) comprend un autre plan d'affichage permettant d'associer à quatre directions de déplacement du levier sélecteur (3), plus de quatre fonctions différentes, affichées par l'installation d'affichage (16).

10. Véhicule selon l'une quelconque des revendications 1 à 9,
**caractérisé en ce que**
l'affichage de l'installation d'affichage (16) dans toutes les positions de conduite est commandé par l'installation électrique de commande de boîte de vitesses (2) et la position de conduite P utilisée se détermine à l'aide d'un capteur dans la boîte de vitesses qui commande alors l'installation d'affichage (16).

11. Véhicule selon la revendication 10,
**caractérisé en ce que**
lorsque l'allumage est coupé, l'installation électrique de commande de boîte de vitesses (2) est coupée si le capteur de la boîte de vitesses commande l'installation d'affichage (16).

12. Véhicule selon la revendication 11,
**caractérisé en ce que**
l'affichage d'installation d'affichage (16) lorsque l'allumage est coupé et que la position P est utilisée, après une durée prédéterminée ou lorsque la clé de contact (5) est extraite de la serrure de contact (4), sera coupé par un circuit de coupure de consommation ou par l'actionnement d'une serrure de portière du véhicule.

13. Véhicule selon l'une quelconque des revendications 1 à 12,
**caractérisé par**
un élément d'actionnement permettant au conducteur de mettre en oeuvre le blocage de stationnement.

14. Véhicule selon l'une quelconque des revendications 1 à 13,
**caractérisé en ce que**
la mise en place du blocage de stationnement par l'intermédiaire de l'élément d'actionnement produit l'actionnement du frein de stationnements.

15. Véhicule selon l'une quelconque des revendications 1 à 14,
**caractérisé en ce que**
la serrure de contact (4) est munie d'un élément d'interdiction notamment d'un élément d'interdiction électromagnétique qui ne permet l'extraction de la clé de contact (5) que si la vitesse du véhicule est nulle ou si la vitesse est nulle et si en même temps le frein de fonctionnement a été actionné.

16. Véhicule selon l'une quelconque des revendications 1 à 15,
**caractérisé en ce que**
l'élément d'interdiction est commandé par un appareil de commande de préférence l'appareil de commande de boîte de vitesses et/ou de frein .

17. Véhicule selon l'une quelconque des revendications 1 à 16,
**caractérisé en ce que**
l'installation électrique de commande de boîte de vitesses (2) actionne une position de conduite pour le fonctionnement du véhicule que si en même temps le frein de fonctionnement est actionné.

18. Véhicule selon la revendication 17,
**caractérisé par**
une installation de signalisation acoustique et/ou optique qui est actionnée si l'on cherche à passer un rapport de vitesses en mode de fonctionnement sans actionner le frein de fonctionnement.

19. Véhicule selon l'une quelconque des revendications 1 à 18,
**caractérisé en ce que**
le blocage de stationnement ne peut être mis au repos que par un système de déverrouillage de secours mécanique, notamment à partir de l'habitacle.
